# EUROPEAN PATENT APPLICATION

(11) **EP 1 241 130 A1**
(43) Date of publication of application: **18.09.2002**
(21) Application number: 02005358.3
(22) Date of filing: 14.03.2002
(51) Int. Cl.: C01B 3/38, C01B 3/40

(54) **Process for producing synthesis gas**

(30) Priority: 14.03.2001 JP 2001071986; 14.03.2001 JP 2001071987; 12.02.2002 JP 2002034003; 12.02.2002 JP 2002034004
(71) Applicant: Toyo Engineering Corporation, Chiyoda-ku, Tokyo (JP)
(72) Inventor: Numaguchi, Toru, Mihama-ku, Chiba-shi, Chiba (JP); Shimagaki, Makoto, Chiba (JP); Hirotani, Kunio, Chiba-shi, Chiba (JP); Nakamura, Hitoshi, Yotsukaido-shi, Chiba (JP)
(74) Representative: Zumstein, Fritz, Dr.

(57) **Abstract**

A process for producing a synthesis gas which comprises the steps of mixing a desulfurized light natural gas with steam; pre-heating the mixed gas; carrying out a first reforming reaction at a temperature of 500 to 750°C under adiabatic conditions by bringing the gas into contact with a catalyst having a specific porosity in which a specific amount of nickel or a platinum group metal is contained as an active component in a carrier composed of CaO and Al₂O₃ and containing a specific amount of CaO, at least part of CaO forming a compound together with Al₂O₃, or a catalyst in which a specific amount of nickel is contained in an α-alumina carrier containing 98% by weight or more of aluminum oxide and having a specific porosity; and then carrying out a second reforming reaction in reformer tubes in a heating furnace. The light natural gas may be a gas obtainable by reacting a desulfurized heavy natural gas with steam.

## Description

### BACKGROUND OF THE INVENTION

### a) Field of the Invention

The present invention relates to a process for producing a synthesis gas (a mixed gas containing hydrogen and carbon monoxide) from a light natural gas or a heavy natural gas and water.

### b) Description of the Related Art

In general, as a process for producing a synthesis gas from a natural gas and water, it is usual that a natural gas and steam are introduced into a number of reaction tubes (steam-reformer tubes) filled with a heat-resistant catalyst, i.e., reformer tubes in a heating furnace (reaction tubes placed in the heating furnace for reacting the natural gas with steam under heating to reform the gas) at an inlet temperature of 350 to 550°C to cause the following reactions:

CH₄ + H₂O = CO + 3H₂

CO + H₂O = CO₂ + H₂

In either case of using the light or the heavy natural gas, since a methane concentration at the outlet of the reformer tubes in the heating furnace is desirably as low as possible, it is necessary to raise a temperature at the outlet of the reformer tubes in the heating furnace. For the purpose, heat corresponding to sensible heat and heat of an endothermic reaction is supplied to the reformer tubes in the heating furnace, so that the reforming tubes in the heating furnace are heated from the outside by a burner placed in the heating furnace.

Since the temperature of a synthesis gas at the outlet of the reforming tubes in the heating furnace is elevated up to 770 to 850°C by the heating, and as a result, a surface metal of the reforming tubes in the heating furnace is exposed to a high temperature of 900 to 1000°C, expensive metal tubes for a high temperature such as a nickel alloy are employed. However, the plant cost for the reforming tubes occupies a large portion of production cost for the synthesis gas, and therefore it increases the total production cost for the synthesis gas (Toru Numaguchi, Petrotech, Vol. 22(8), p. 675, 1999). Accordingly, from the viewpoint of economy and also from the viewpoint of resource saving of precious metals (nickel etc.), further improvement has been desired.

In order to solve the above problems, a process for producing a synthesis gas has recently been proposed in which two pre-reformers are provided on the upstream of the reformer tubes in the heating furnace and in the reformers, a natural gas is converted to the synthesis gas to some extent, and the remainder of the natural gas is then reacted in the reforming tubes in the heating furnace [Kvaerner, "Ammonia Technical Manual", p. 13, 2000].

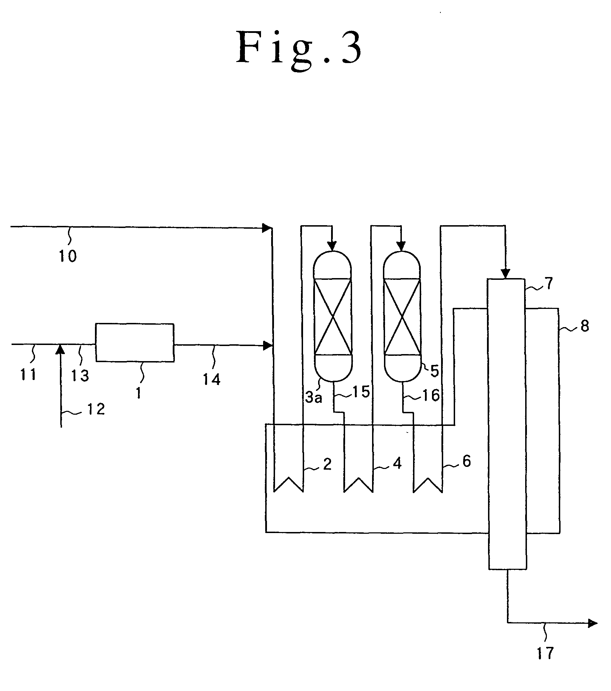

In this process, as shown in Fig. 3, two pre-reformers (a first pre-reformer 3a and a second pre-reformer 5) are provided for reducing a heat duty of the reformer tubes 7 in the heating furnace. A starting natural gas fed through a line 11 is mixed with recycling hydrogen through a line 12, and it is then fed to a desulfurizer 1 through a line 13 as a mixed gas having a hydrogen concentration of 2 to 5% by volume. In the desulfurizer 1, organic sulfur in the natural gas is converted into hydrogen sulfide at 350 to 400°C in the presence of a Co-Mo catalyst, and the thus-formed hydrogen sulfide is then adsorbed on ZnO for desulfurization. The desulfurized natural gas is fed through a line 14 and then mixed with steam fed through a line 10 to form a mixed gas having a steam/carbon molar ratio (hereinafter abbreviated to S/C) of 3.2, which is then fed to a pre-heater 2 at 350°C. The steam-mixed natural gas is heated up to 500°C in the pre-heater 2 by utilizing exhaust heat after heating the reformer tubes placed in a heating furnace 8, and then fed to a first reformer 3a filled with a catalyst having a reforming activity, in which a reaction is carried out under adiabatic conditions until the temperature lowers to 450°C. A methane conversion in the first reformer 3a is 3.7%. The reason of such a low conversion rate is because the reaction does not proceed owing to the low reaction temperature. The reformed gas is passed through a line 15 and then heated up to 650°C in a pre-heater 4. Afterward, the gas is fed to a second reformer 5, and the reaction is carried out under the adiabatic conditions until the outlet temperature has reached 564°C. The methane conversion in the second reformer 5 is 9.2%. The outlet gas is passed through a line 16, heated again up to 650°C in a pre-heater 6, and then fed to the reformer tubes 7 in the heating furnace, the tubes being filled with a usual reforming catalyst. The reformer tubes 7 in the heating furnace are heated by a burner (not shown) so that the outlet temperature of the reformed gas may be 750°C. At the outlet (line 17) of the reformer tubes 7 in the heating furnace, a methane concentration is 10.4% by volume and a total conversion rate is 46.5%. Namely, 8.0% of the total reforming proceeds in the first reformer 3a, 19.8% of the total reforming proceeds in the second reformer 5, and remaining 72.2% proceeds in the reformer tubes 7 in the heating furnace.

As described above, at the reformer tubes 7 in the heating furnace, the total heat of sensible heat plus reaction heat is fed by the burner provided in the heating furnace 8. However, owing to a large heat transfer resistance of a film inside each of the reformer tubes 7 in the heating furnace and the like, the surface temperature of the reformer tubes 7 in the heating furnace rises as the heat supply increases. For solving this problem, it is necessary to decrease the heat quantity supplied to the reformer tubes 7 in the heating furnace.

Namely, before this process has been proposed, the total heat quantity was supplied only through the reforming tubes 7 in the heating furnace, but in this process, part of the heat quantity is supplied to two pre-reformers provided on the upstream of the reformer tubes 7 in heating furnace and the remainder of the heat quantity is supplied to the reformer tubes 7 in the heating furnace.

In practice, after pre-heated, the natural gas is fed to the two pre-reformers filled with a catalyst having a steam-reforming activity which are provided on the upstream of the reformer tubes in the heating furnace, whereby part of the natural gas is converted into the synthesis gas. From an economical viewpoint, the conversion in the above two pre-reformers is carried out under adiabatic conditions by the use of the two pre-reformers having approximately the same inner diameter and height. The conversion in the two pre-reformers is 27.8% of the total conversion into the synthesis gas, and the remaining natural gas is reacted in the reformer tubes in the heating furnace.

Furthermore, in this process, there is used a catalyst having a heat-resistant temperature of 650°C at maximum which is developed on the basis of a catalyst for producing a substitute natural gas (SNG), whereby the heat quantity to be supplied to the reforming tubes in the heating furnace can be reduced to 62.1% of the heat quantity to be supplied to the reformer tubes in the heating furnace in the case that no pre-reformers are provided on the upstream of the reformer tubes in the heating furnace.

However, the above conventional technology has various problems as mentioned below.

Namely, the above catalyst used in the reformers has been developed regarding an activity at a low temperature as important because an SNG reaction is carried out at a low temperature, and thus its heat resistance is limited to 650°C. Therefore, the process combining the two pre-reformers and the reformer tubes in the heating furnace can reduce the supplied heat quantity necessary for the reformer tubes in the heating furnace to some extent, so that some simplification of facilities for the reformer tubes in the heating furnace can be expected, but a practical advantage is limited.

In other words, unless the catalyst having the high activity at the low temperature and the excellent heat resistance is used in the reformer, the practical advantage cannot be obtained even by the combination of the two pre-reformers and the reformer tubes in the heating furnace.

For resource saving by compacting the reformer tubes in the heating furnace (reduction of the number of the tubes, decrease of the thickness of the tubes, and the like) wherein the expensive metal tubes for a high temperature are used, it is preferable to reduce the supply of the heat to the reformer tubes in the heating furnace as much as possible. For this purpose, it is important to increase the conversion to the synthesis gas in the pre-reformer provided on the upstream of the reformer tubes in the heating furnace.

In the case of reforming the natural gas, the reaction is totally endothermic, and hence the outlet temperature of the reformer lowers under the adiabatic conditions. Therefore, it is desirable to raise the inlet temperature of the reformer as high as possible under the adiabatic conditions.

For a heavy natural gas having a high heating value of 9,850 Kcal/Nm³ or more, a nickel catalyst containing an alkali component is used in a portion or all of the reformer tubes in the heating furnace. Since this catalyst improves carbon-depositing resistance at the sacrifice of the activity, it has a disadvantage that a necessary amount of the catalyst is large. As mentioned above, therefore, there increases the number of the reformer tubes in the furnace wherein the expensive metal tubes for the high temperature are used.

### SUMMARY OF THE INVENTION

An object of the present invention is to provide a process for producing a synthesis gas wherein a heat supply quantity necessary for reformer tubes in a heating furnace can be reduced by reforming a light natural gas in a first step reformer filled with a catalyst having a high activity at a low temperature.

Another object of the present invention is to provide a process for producing a synthesis gas wherein a heat supply quantity necessary for reformer tubes in a heating furnace can be reduced by reforming a light natural gas, which is obtainable by reacting a heavy natural gas with steam, in a first step reformer filled with a catalyst having a high activity at a low temperature.

The above objects of the present invention are accomplished by a process for producing a synthesis gas described in the following:
A process for producing a synthesis gas wherein a desulfurized light natural gas and steam are pre-heated and then a reforming reaction for the synthesis gas is carried out in two steps of a first step under adiabatic conditions and a second step under heating to produce the synthesis gas, said process comprising:
   a step of feeding the pre-heated desulfurized light natural gas and steam to a first step reformer to carry out a first step reforming reaction at a temperature of 500 to 750°C, and
   a step of introducing the reformed gas coming from the first step reformer into reformer tubes in a heating furnace (a second step reformer) to carry out a second step reforming reaction,
wherein the first step reformer is filled with a catalyst in which nickel is contained as an active component in an amount of 3 to 20% by weight in terms of nickel oxide to the total weight of the catalyst or a platinum group metal is contained as a platinum group element in an amount of 0.2 to 5% by weight to the total weight of the catalyst in a carrier composed of CaO and Al₂O₃ and containing CaO in an amount of 0.5 to 25% by weight to the total weight of the catalyst, at least part of CaO forming a compound together with Al₂O₃, and in which a porosity X of pores having a pore diameter of 0.5 µm to 20 µm is 0.08 or more, a porosity Y of pores having a pore diameter of less than 0.5 µm is 0.15 or more, and a porosity Z of the total pores is from 0.23 to 0.8 (provided that Z ≥ X + Y),
or a catalyst comprising nickel as an active component in an amount of 3 to 20% by weight in terms of nickel oxide to the total weight of the catalyst in an α-alumina carrier containing 98% by weight or more of aluminum oxide, in which carrier a volume of pores having a pore diameter within a range of 0.1 to 0.5 µm is 0.2 cm³/g or more and a volume of pores having a pore diameter of 0.5 µm or more is 0.05 cm³/g or more.

### BRIEF DESCRIPTION OF THE DRAWINGS

In the attached drawings,
Fig. 1 is a flow sheet showing one embodiment of a process for producing a synthesis gas from a light natural gas according to the present invention;
Fig. 2 is a flow sheet showing one embodiment of the process for producing the synthesis gas from a heavy natural gas according to the present invention; and
Fig. 3 is a flow sheet showing a conventional process for producing the synthesis gas from a light natural gas.

### DESCRIPTION OF PREFERRED EMBODIMENTS OF THE INVENTION

In the present invention, a light natural gas preferably has a high heating value of 9,850 kcal/Nm³ or less. In the light natural gas, a content of hydrocarbons having 2 or more carbon atoms is preferably 5% by volume or less.

The above-mentioned light natural gas may be a gas obtainable by reacting a desulfurized heavy natural gas with steam in a reactor filled with a catalyst for the production of a substitute natural gas (SNG).

The heavy natural gas in the invention preferably has a high heating value of more than 9,850 kcal/Nm³.

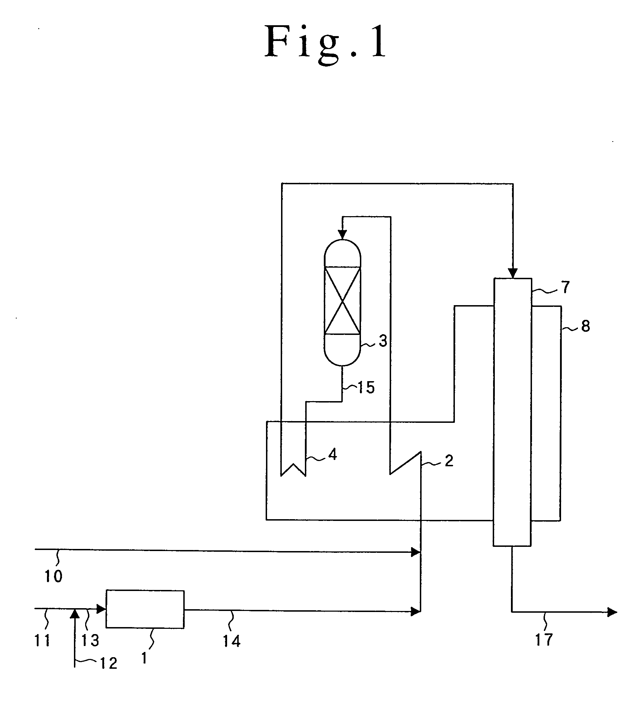

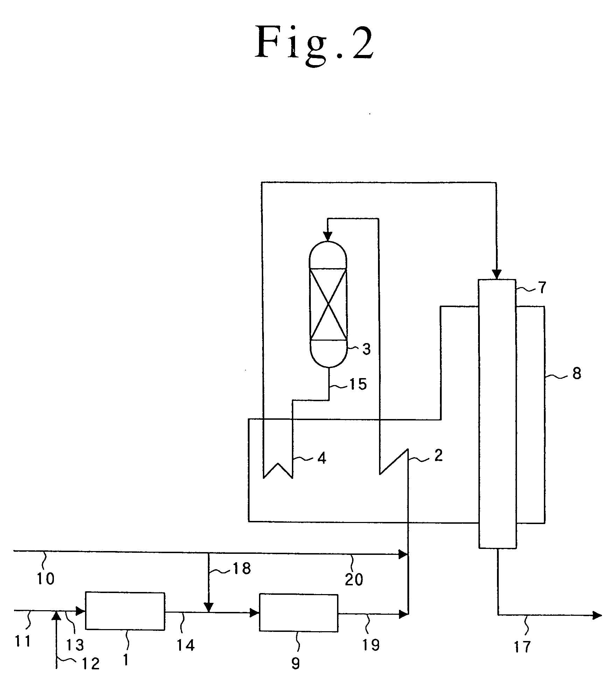

The present invention will be described in detail with reference to Figs. 1 and 2. Fig. 1 is a flow sheet of a process for carrying out a reforming reaction of a light natural gas in two steps, wherein a starting light natural gas fed through a line 11 is mixed with recycling hydrogen through a line 12 and then fed through a line 13 to a desulfurizer 1 as a mixed gas having a hydrogen concentration of 2 to 5% by volume. In the desulfurizer 1, organic sulfur in the natural gas is converted into hydrogen sulfide preferably at 350 to 400°C in the presence of a Co-Mo catalyst. The thus-formed hydrogen sulfide is adsorbed on ZnO for desulfurization. The desulfurized natural gas is fed through a line 14 and then mixed with steam fed through a line 10 to be an S/C of 3.2, and then the gas is fed to a pre-heater 2 at a temperature of about 350°C. The steam-mixed natural gas is heated up to about 750°C in the pre-heater 2 by the utilization of exhaust heat after heating reformer tubes 7 in a heating furnace. The gas is then fed to a first step reformer 3 filled with a catalyst having a high activity at a low temperature and an excellent heat resistance according to the present invention. In the first step reformer 3, a reaction is carried out under adiabatic conditions so that a methane conversion is from 10 to 16% and an outlet temperature of the first step reformer 3 is preferably from about 595 to 670°C.

The reforming reaction in the first step reformer 3 is carried out at 500 to 750°C, particularly preferably at 550 to 700°C. When the reaction temperature is lower than 500°C, a reduction effect of the heat to be supplied to the reformer tubes 7 in the heating furnace is small. When the temperature is higher than 750°C, an increased heat transfer area of the pre-heater is required, which is not preferable, because the pre-heater part goes against resource saving.

Furthermore, in the reforming reaction in the first step reformer 3, the conversion is preferably from 10 to 46%, particularly from 30 to 45% of the total conversion of the starting natural gas to the synthesis gas. When the conversion is less than 10%, the reduction effect of the heat to be supplied to the reformer tubes 7 in the heating furnace is small, and when the conversion exceeds 46%, the increased heat transfer area of the pre-heater is required, which is not preferable, because the pre-heater part goes against the resource saving.

As the catalyst according to the present invention with which the first step reformer is filled, there is used a catalyst having a high activity at a low temperature and an excellent heat resistance in which nickel is contained as an active component in an amount of 3 to 20% by weight in terms of nickel oxide to the total weight of the catalyst or a platinum group metal is contained as a platinum group element in an amount of 0.2 to 5% by weight to the total weight of the catalyst in a carrier composed of CaO and Al₂O₃ and containing CaO in an amount of 0.5 to 25% by weight to the total weight of the catalyst, at least part of CaO (preferably 5 to 95% of CaO) forming a compound together with Al₂O₃, and in which catalyst a porosity X of pores having a pore diameter of 0.5 µm to 20 µm is 0.08 or more, a porosity Y of pores having a pore diameter of less than 0.5 µm is 0.15 or more, and a porosity Z of the total pores is from 0.23 to 0.8 (provided that Z ≥ X + Y); or there is used a catalyst comprising nickel in an amount of 3 to 20% by weight in terms of nickel oxide to the total weight of the catalyst in an α-alumina carrier containing 98% by weight or more of aluminum oxide in which carrier a volume of pores having a pore diameter ranging 0.1 to 0.5 µm is 0.2 cm³/g or more and a volume of pores having a pore diameter of 0.5 µm or more is 0.05 cm³/g or more. The platinum group metal is preferably Ruthenium.

The reformed gas is passed through a line 15 and then heated up to about 650°C in a pre-heater 4 provided in a heating furnace 8. Afterward, according to a method known per se, a second step reforming reaction is carried out in reformer tubes 7 in the heating furnace filled with a usual reforming catalyst. In the pre-heater 4, the gas is pre-heated by the utilization of exhaust heat after heating the reformer tubes 7 in the heating furnace as in pre-heater 2. The reformer tubes 7 in the heating furnace are heated by a burner (not shown) in the heating furnace 8 so that process gas temperature may be about 750°C. at the outlet.

As described above, at the outlet of the reformer tubes 7 in the heating furnace, a methane concentration is particularly preferably from 8 to 12% by volume and a total conversion is from 40 to 50%. That is, particularly preferably, 30 to 45% of the total conversion of the reforming proceeds in the first step reformer 3, and remaining 55 to 70% proceeds in the reformer tubes 7 in the heating furnace.

A process of the present invention in the case of starting with a heavy natural gas will be described with reference to Fig. 2. Fig. 2 is a flow sheet of a process for producing a synthesis gas from a heavy natural gas, wherein the starting heavy natural gas fed through a line 11 is mixed with recycling hydrogen through a line 12 to form a mixed gas having a hydrogen concentration of 2 to 5% by volume. This mixed gas is fed to a desulfurizer 1 through a line 13 and organic sulfur in the natural gas is converted into hydrogen sulfide preferably at 350 to 400°C in the presence of a Co-Mo catalyst. The thus-formed hydrogen sulfide is adsorbed on ZnO for desulfurization. Afterward, the natural gas is fed to a line 14 and mixed with steam fed through a line 18 and branched from a line 10 so as to be a molar ratio of S/C of about 1.5, and the gas is then fed to an SNG reactor 9 at a temperature of 350 to 450°C.

The SNG reactor 9 is filled with a commercially available catalyst for SNG production, where the heavy natural gas is converted into a light natural gas containing methane as a main component and having a high heating value of preferably 9,850 kcal/Nm³ or less. The formed light natural gas is taken out from an SNG reactor through a line 19, and mixed with steam (the remaining part of steam fed from a line 10 and branched to the line 18) fed through a line 20 so as to be an S/C ratio of about 3.2. The mixed gas is fed, at a temperature of about 350°C, to the pre-heater 2. The downstream of the pre-heater 2 is reformed in two steps similarly to the process shown in Fig. 1, thereby producing the synthesis gas.

Next, the present invention will be concretely described with reference to some examples and comparative examples.

### Example 1

A synthesis gas was produced from 6,768 kg mol/h of a starting light natural gas (high heating value: 9,010 kcal/Nm³) having the following composition:
CH₄ : 92.62% by volume
C₂H₆ : 0.41% by volume
C₃H₈ : 0.22% by volume
n-C₄H₁₀: 0.02% by volume
N₂ : 3.87% by volume
H₂ : 2.00% by volume
CO : 0.08% by volume
CO₂ : 0.77% by volume
and steam (S/C = 3.2). The first step reformer was filled with a catalyst in which nickel was contained as an active component in an amount of 12.0% by weight in terms of nickel oxide in a carrier composed of CaO and Al₂O₃ and containing CaO in an amount of 6.0% by weight in the catalyst, 90% of CaO forming a compound with Al₂O₃, and in which a porosity X of pores having a pore diameter of 0.5 µm to 20 µm was 0.17, a porosity Y of pores having a pore diameter of less than 0.5 µm was 0.34, and a porosity Z of the total pores was 0.51.

A temperature in each line, the heat supplied to reformer tubes in a heating furnace, a ratio of the heat supplied to the reformer tubes in the heating furnace, and a conversion of methane in each reforming step are shown in Table 1. In the case that no reformer was used on the upstream side of the reformer tubes in the heating furnace, a heat supply of 222.4 Gcal/h was necessary for the reformer tubes in the heating furnace. However, as shown in Table 1, when only one reformer was provided on the upstream of the tubes, the heat supplied to the reformer tubes in the heating furnace could be reduced to 57.4% of the heat in the case that no reformer was provided, which meant that there was observed an effect of reducing a load of the reformer tubes in the heating furnace where the expensive metal tubes were used for a high temperature.

### Example 2

A starting heavy natural gas (high heating value: 10,325 kcal/Nm³) having the following composition:
CH₄ : 84.10% by volume
C₂H₆ : 5.50% by volume
C₃H₈ : 3.68% by volume
n-C₄H₁₀: 1.21% by volume
N₂ : 1.36% by volume
H₂ : 3.93% by volume
CO : 0.00% by volume
CO₂ : 0.19% by volume
was reacted with steam at 350°C in an SNG reactor filled with a generally commercially available catalyst for SNG production (composition: 45% by weight of Ni and 55% by weight of γ-Al₂O₃) to convert the heavy natural gas into a light natural gas (high heating value: 9,010 kcal/Nm³) having the following composition:
CH₄ : 92.62% by volume
C₂H₆ : 0.41% by volume
C₃H₈ : 0.22% by volume
n-C₄H₁₀: 0.02% by volume
N₂ : 3.87% by volume
H₂ : 2.00% by volume
CO : 0.08% by volume
CO₂ : 0.77% by volume.

A synthesis gas was produced from 6,768 kg mol/h of the light natural gas and steam (S/C = 3.2). The first step reformer was filled with a catalyst in which nickel was contained as an active component in an amount of 12.0% by weight in terms of nickel oxide in a carrier composed of CaO and Al₂O₃ and containing CaO in an amount of 6.0% by weight in the catalyst, 90% of CaO forming a compound with Al₂O₃, and in which a porosity X of pores having a pore diameter of 0.5 µm to 20 µm was 0.17, a porosity Y of pores having a pore diameter of less than 0.5 µm was 0.34, and a porosity Z of the total pores was 0.51.

A temperature in each line, the heat supplied to reformer tubes in a heating furnace, a ratio of the heat supplied to the reformer tubes in the heating furnace, and a conversion of methane in each reforming step are shown in Table 1. In the case that no reformer was used on the upstream of the reformer tubes in the heating furnace, a heat supply of 222.4 Gcal/h was necessary for the reformer tubes in the heating furnace. However, as shown in Table 1, when only one reformer was provided on the upstream of the tubes, the heat supplied to the reforming tubes in the heating furnace could be reduced to 57.4% of the heat in the case that no reformer was provided, which meant that there was observed an effect of reducing a load of the reforming tubes in the heating furnace where the expensive metal tubes were used for a high temperature.

### Example 3

A reforming reaction was carried out under the same conditions as in Example 1 using the same catalyst as in Example 1 with the exception that the catalyst contains Ru as an active component in an amount of 0.5% by weight. A temperature in each line, the heat supplied to reformer tubes in a heating furnace, a ratio of the heat supplied to the reformer tubes in the heating furnace, and a conversion of methane in each reforming step are shown in Table 1.

### Example 4

A reforming reaction was carried out under the same conditions as in Example 1 using a catalyst comprising an α-alumina carrier containing 99.0% by weight of aluminum oxide wherein a volume of pores having a pore diameter ranging 0.1 to 0.5 µm was 0.22 cm³/g, a volume of pores having a pore diameter of 0.5 µm or more was 0.07 cm³/g, and nickel was contained as an active component in an amount of 8.0% by weight in terms of nickel oxide in this carrier. Temperature conditions and results are shown in Table 1.

### Comparative Example 1

A synthesis gas was produced from a light natural gas having the same composition as in Example 1 and steam by a conventional process as shown in Fig. 3 wherein two reformers (a first pre-reformer 3a and a second reformer 5) were provided on the upstream of the reformer tubes 7 in the heating furnace.

The two reformers on the upstream of the tubes were each filled with a catalyst having a heat resistance of 650°C at maximum, which was developed on the basis of a catalyst for producing a substitute natural gas (SNG).

A temperature in each line, the heat supplied to reformer tubes in a heating furnace, a ratio of the heat supplied to the reformer tubes in the heating furnace, and a conversion of methane in each reforming step are shown in Table 1. As shown in Table 1, the heat supplied to the reformer tubes in the heating furnace was reduced to only 62.1% of the heat in the case that no pre-reformer was used on the upstream of the reformer tubes. For achieving this reduction, it was necessary to provide two pre-reformers on the upstream of the reformer tubes, and hence the effect of resource saving was small.

### Comparative Example 2

A heavy natural gas was converted into a light natural gas in the same manner as in Example 2, and from this light natural gas and steam, a synthesis gas was produced in the same manner as in Comparative Example 1.

A temperature in each line, the heat supplied to reformer tubes in a heating furnace, a ratio of the heat supplied to the reformer tubes in the heating furnace, and a conversion of methane in each reforming step are shown in Table 1. As shown in Table 1, the heat supplied to the reformer tubes in the heating furnace was reduced to only 62.1% of heat in the case that no pre-reformer was used on the upstream of the reformer tubes. For achieving this reduction, it was necessary to provide two pre-reformers on the upstream of the reforming tubes, and hence the effect of resource saving was small.

**Table 1**

| | Examples 1 and 2 | Example 3 | Example 4 | Comp. Examples 1 and 2 |
|---|---|---|---|---|
| Upstream reforming part Pre-heater 2 inlet temp./outlet temp. °C | 350/750 | 350/750 | 350/750 | 350/500 |
| First step reformer (First pre-reformer) inlet temp./outlet temp. °C | 750/595 | 750/595 | 750/595 | 500/450 |
| Methane conversion % | 16 | 16 | 16 | 3.7 |
| Pre-heater 4 inlet temp./outlet temp. °C | 595/650 | 595/650 | 595/650 | 450/650 |
| Second pre-reformer inlet temp./outlet temp. °C | - | - | - | 650/564 |
| Methane conversion % | - | - | - | 9.2 |
| Reforming part in heating furnace Pre-heater 6 inlet temp./outlet temp. °C | - | - | - | 564/650 |
| Second step reformer(reformer tubes in heating furnace) inlet temp./outlet temp. °C | 650/750 | 650/750 | 650/750 | 650/750 |
| Methane conversion % | 30.5 | 30.5 | 30.5 | 33.6 |
| Heat supplied to reformer tubes in heating furnace Gcal/h | 127.6 | 127.6 | 127.6 | 138 |
| Ratio of heat supplied to reformer tubes in heating furnace % | 57.4 | 57.4 | 57.4 | 62.1 |

When a catalyst having a heat resistant temperature of 650°C or higher and a high activity at a low temperature is used in an upstream (first step) reformer, it is not always necessary to provide the plurality of upstream reformers of a conventional technique, so that the upstream reforming facilities are simplified, and resources for a reactor material and the catalyst regarding the upstream reformer are saved. In addition, it is possible to realize a larger reduction of the heat quantity to be supplied to reforming tubes in a heating furnace than in the case of the conventional technique, and thus an expensive nickel alloy for a high temperature is saved.

Furthermore, in the case that a synthesis gas is produced by using a heavy natural gas as a staring material, there has heretofore been a risk of coaking owing to the cracking of higher hydrocarbons in the starting material. However, according to the present invention, the heavy natural gas is converted into a light natural gas containing methane as the main component prior to reforming the heavy natural gas, so that the risk of coaking is eliminated.

## Claims

1. A process for producing a synthesis gas wherein a desulfurized light natural gas and steam are pre-heated and then a reforming reaction for the synthesis gas is carried out in two steps of a first step under adiabatic conditions and a second step under heating to produce the synthesis gas, said process comprising:
a step of feeding the pre-heated desulfurized light natural gas and steam to a first step reformer to carry out a first step reforming reaction at a temperature of 500 to 750°C, and
a step of introducing the reformed gas coming from the first step reformer into reformer tubes in a heating furnace (a second step reformer) to carry out a second step reforming reaction,
wherein the first step reformer is filled with a catalyst in which nickel is contained in an amount of 3 to 20% by weight in terms of nickel oxide to the total weight of the catalyst or a platinum group metal is contained as a platinum group element in an amount of 0.2 to 5% by weight to the total weight of the catalyst in a carrier composed of CaO and Al₂O₃ and containing CaO in an amount of 0.5 to 25% by weight to the total weight of the catalyst, at least part of CaO forming a compound with Al₂O₃, and in which a porosity X of pores having a pore diameter of 0.5 µm to 20 µm is 0.08 or more, a porosity Y of pores having a pore diameter of less than 0.5 µm is 0.15 or more, and a porosity Z of the total pores is from 0.23 to 0.8 (provided that Z ≥ X + Y),
or a catalyst comprising nickel as an active component in an amount of 3 to 20% by weight in terms of nickel oxide to the total weight of the catalyst in an α-alumina carrier containing 98% by weight or more of aluminum oxide, in which carrier a volume of pores having a pore diameter within a range of 0.1 to 0.5 µm is 0.2 cm³/g or more and a volume of pores having a pore diameter of 0.5 µm or more is 0.05 cm³/g or more.

2. The process for producing the synthesis gas according to claim 1, wherein the light natural gas has a high heating value of 9,850 Kcal/Nm³ or less.

3. The process for producing the synthesis gas according to claim 1, wherein the light natural gas is a gas obtainable by reacting a desulfurized heavy natural gas with steam.
